# EUROPEAN PATENT SPECIFICATION

(11) **EP 2 145 843 B1**
(45) Date of publication and mention of the grant of the patent: **31.10.2012**
(21) Application number: 08761501.9
(22) Date of filing: 16.04.2008
(51) Int. Cl.: B65G 17/08, B65G 17/40

(54) **LINK FOR CONVEYOR CHAINS AND CHAIN OBTAINED THEREWITH**
VERKNÜPFUNG FÜR FÖRDERKETTEN UND DADURCH GEWONNENE KETTE
CHAÎNON POUR TRANSPORTEURS À CHAÎNE ET CHAÎNE OBTENUE À L'AIDE DE CE CHAÎNON

(30) Priority: 23.04.2007 ES 200701083
(43) Date of publication of application: 20.01.2010
(73) Proprietor: San Miguel Zarzuela, Angel Carmelo, 47012 Valladolid (ES)
(72) Inventor: SAN MIGUEL NUÑEZ, Javier, E-47012 Valladolid (ES)
(74) Representative: Temino Ceniceros, Ignacio
(86) International application number: PCT/ES2008/000254
(87) International publication number: WO 2008/129099

(56) References cited:
- EP-A1- 0 144 455
- EP-A2- 0 173 865
- EP-A2- 0 201 317
- EP-A2- 1 588 958
- WO-A1-97/28072
- WO-A1-2006/021111
- CH-A5- 692 339
- DE-U1- 9 411 204
- US-A- 3 628 834

## Description

### OBJECT OF THE INVENTION

This invention is a link whose function is to form part of a transporting chain, that is to say a conveyor belt, composed of a series of articulated modules that make up the aforementioned links.

The purpose of the invention is to create a conveyor belt where the links are joined to each other without any articulation rods, thus providing optimum benefits from the viewpoint of cleanliness, strength and the assembly and mounting of the chain.

The invention is particularly suitable for application to the conveyor belts that are used for food products, where matters concerning hygiene are of paramount importance.

### BACKGROUND TO THE INVENTION

Conveyor belts or chains are well known, when they are of the type that, as has already been pointed out, are formed by links, whose width is the same as the belt or a sub-multiple thereof, where the edges of these links are equipped with lugs provided with holes that, when coupled up coaxially enable articulation rods to pass through, so that the belt or chain can fold when the belt changes direction, that is to say, in a way that is consistent with the ends of the work surface, where the belt or chain goes back on itself to return to its starting point, with the help of indented crowns that also serve as hauling devices that are guided by the belt.

In more recent times, conveyor belts or chains have been used whose links are no longer equipped with articulation rods between them, the links having matched couplings at their supplementary edges that enable them to be assembled and disassembled when those links form an angle that exceeds 90°, an angle that never occurs under normal work conditions and that under such conditions guarantees an acceptable articulated joint between links.

One such example is Patent WO 97/28072, where the links have a socketed edge that forms a series of hooks, whose interior considerably exceeds the semi-cylinder, whereas the opposite edge is equipped with protruding elements, that operate in a supplementary capacity to the aforementioned socketed pieces, which are basically cylindrical but with two flat and parallel panelled parts that can be inserted through the slightly constricted mouth of the socketed seating. WO 97/28072 discloses a link according to the preamble of claim 1.

This solution considerably reduces the section of the protruding pieces, and it is also difficult to gain access to the spaces along the belt or chain when the latter has to be cleaned, owing to the presence of the two aforementioned sections.

This second aspect of the above-mentioned problem is a major drawback when the conveyor belt or chain is to be used for transporting food products, such as meat, vegetables, etc. because, as has already been pointed out, the hygiene standards at the facilities have to be very high.

European Patent EP 1 588 958 must also be mentioned, because its links also have a socketed edge and a protruding edge, with their respective supplementary alignments of recesses and protruding pieces, which in an angular position between links that they are never going to reach in practice, can be coupled up to each other, and which when the slope is gentler or in a coplanar position, become hooked up and allow for a certain degree of tilting and rocking between the links.

Not only this solution but also the one mentioned beforehand, that is to say PCT WO 97/28072, are affected by two problems, on the one hand, the arrangement of the protruding pieces, specifically the layout that they require in order to be inserted into the socketed pieces, weakens them considerably, so that their shear strength is much lower and, on the other hand, the fact that the protruding pieces have two shear planes, makes it much more difficult to gain access to their outer zones to clean them and give them an acceptable hygiene level.

Patent WO 03/072464 comes up with a different solution, where the socketed pieces also take the form of hook-like protrusions, with a cylindrical interior whose mouth is constricted, and the said mouth opens outwards, to enable the protruding pieces to be coupled, the latter taking the form of cylindrical segments that require elastic deformation to enable them to be inserted into the hooks.

This solution is fraught with a problem that is similar to the one affecting the preceding patent because, on the one hand, the socketed hooks - which apart from having been subjected to elastic deformation have no retention capacity given that they are completely open -, tend to open up when the chain is pulled, and on the other hand, the deep grooves leading to the interior of the aforementioned hooks are transversely closed by the arms that frame and support the cylindrical connectors, which also makes cleaning extremely difficult.

### DESCRIPTION OF THE INVENTION

The link for conveyor belts or chains that is proposed by the invention, is of the type that does not have articulation rods but which does have a series of "hooks" at the edges as a means for coupling the socketed pieces, with an intermediate bracket to make it rigid, it also being of the type that is equipped with protruding pieces on its other edge for coupling purposes and so that they can turn inside the hooks, thus overcoming the problems explained above in a completely satisfactory way, guaranteeing not only that the links are securely attached to each other and are easy to assemble, but also that the whole conveyor belt or chain can be easily cleaned, which is even more important.

To be more specific, this is achieved by providing the protruding pieces of the link with one single flat side on their side pivots for coupling the socketed pieces, and that this plane be arranged in the form of an imaginary cord in its theoretical circular section, in such a way that the flat side allows the pivots to be coupled to the seating of the socketed pieces without elastic deformation being necessary in the mouths of those parts, which enables the above-mentioned bracket or partition to be placed upon them and make them much more rigid.

As will be seen later in the drawings, the protruding pieces of the link are arranged in such a way that the structure is considerably more rigid than the structure of the patents referred to above, and this is mainly due to the presence of one single flat side on the protruding pieces of the link, in contrast to the situation with the aforementioned patents, which have two flat sides opposite each other, and this considerably weakens their mechanical strength.

Another characteristic of the invention is that the above-mentioned flat sides on the pivots are positioned in such a way that when the conveyor belt or chain is working under normal conditions, that is to say, when the belt is working in a straight line, their layout is coplanar with respect to the open edge of the partitions or brackets for the socketed pieces, thereby achieving a continuous surface for the coupling between links, which makes the cleaning process easy, and furthermore, when one link is articulated with respect to another, this causes a "scraping" effect, where the surfaces cease to be coplanar, in such a way that the partition or bracket of the socketed piece acts as a scraper or remover of any dirt that might have become between the two pieces.

Another characteristic of the invention is that close to the mouth of the seating for the socketed pieces, and immediately outside the mouth, there is a flat section that serves to guide the flat sides of the pivots while the coupling movement between links is taking place, thus making the coupling process much easier, because it is carried out with the links being in an approximately perpendicular position.

All of this serves to ensure that the socketed pieces have a greater mechanical strength, a more extensive section in the pivots of the protruding pieces, and a lower or internal surface of the conveyor belt, in a working situation, which greatly reduces the presence of nooks and crannies that are difficult to access and where dirt can be deposited.

An alternative realisation of the invention that optimises the process of cleaning the chain, consists of providing the open end of the protruding pieces with an offset, the bottom of which being coplanar with the flat side of its own pivots and whose sides "copy" the internal profile of the mouth of the socketed pieces, as far as the level of the open edge of their intermediate partition, in such a way that when the chain is operating in normal conditions, when the adjacent links are coplanar, transverse grooves are formed whose section is perfectly even and continuous, which guarantees that all the dirt is dragged away, with the aid of a jet of water for example.

Finally, another characteristic of the invention consists of making the socketed pieces slightly elliptical, instead of giving them their classic circular shape, in order to create narrow grooves between the links of the chain, which also makes the cleaning process easier, if for example jets of water are used.

### DESCRIPTION OF THE DRAWINGS

To supplement the description that is being given and with a view to making it easier to get a better understanding of the characteristics of the invention, in accordance with a preferred embodiment thereof, the following series of drawings are included below as an essential part of the description, these drawings being provided purely for the purpose of illustration, and are not to be regarded as being exhaustive:
Figure 1.- Shows a view in perspective of a link for a conveyor belt or chain realised in accordance with the object of this invention, in this case its inner surface, that is to say, showing the opposite face to the operating surface of the chain.
Figure 2.- Shows an enlarged close-up, also in perspective, of one of the socketed pieces that form part the link.
Figure 3.- Shows a close-up in perspective of two of the protruding pieces of the link.
Figure 4.- Shows a perspective similar to Figure 1, with two links properly interconnected.
Figure 5.- Shows a representation similar to the one in Figure 4, with three interconnected links, one of which is articulated with respect to the link that it is coupled to.
Figure 6.- Shows a section of the two links from the preceding figure at an intermediate assembly stage.
Figure 7.- Shows a section similar to the one in Figure 5, but the two links are now finally assembled and mounted.
Figure 8.- A representation similar to the one in Figure 1, but showing an alternative way of realising the link that is envisaged.
Figure 9. - Shows a view in perspective, of two links that are coupled together, similar to Figure 4, but with links like the one in Figure 8.
Figure 10.- Shows a representation similar to the one in Figure 9, in which there are three links coupled together, one of which is in the articulated position with respect to the link to which it is coupled.
Figure 11.- Shows a section of three links like the one in Figure 7, duly connected to each other, seen from several different angles.

### PREFERRED EMBODIMENT OF THE INVENTION

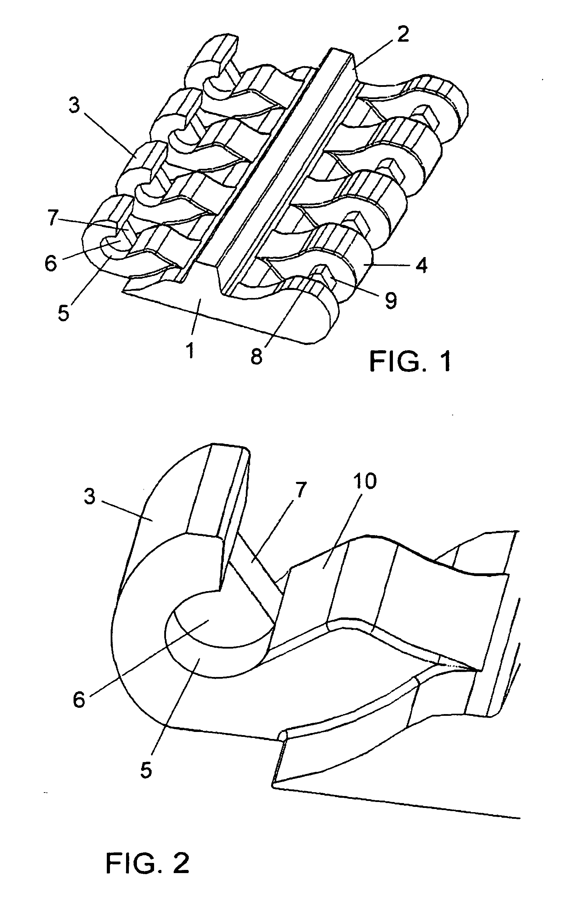

The figures, especially Figures 1 to 6, show how the envisaged link is formed, just like any other conventional link, but without any articulated rods or axes between links, on the basis of an elongated body (1), equipped with the classic lower heel (2) on which the resources for conveying the chain or belt act, one of the lengthways edges being equipped with a set of socketed pieces (3), as well as a series of protruding pieces (4) running along the opposite edge, to interact with the socketed pieces (3).

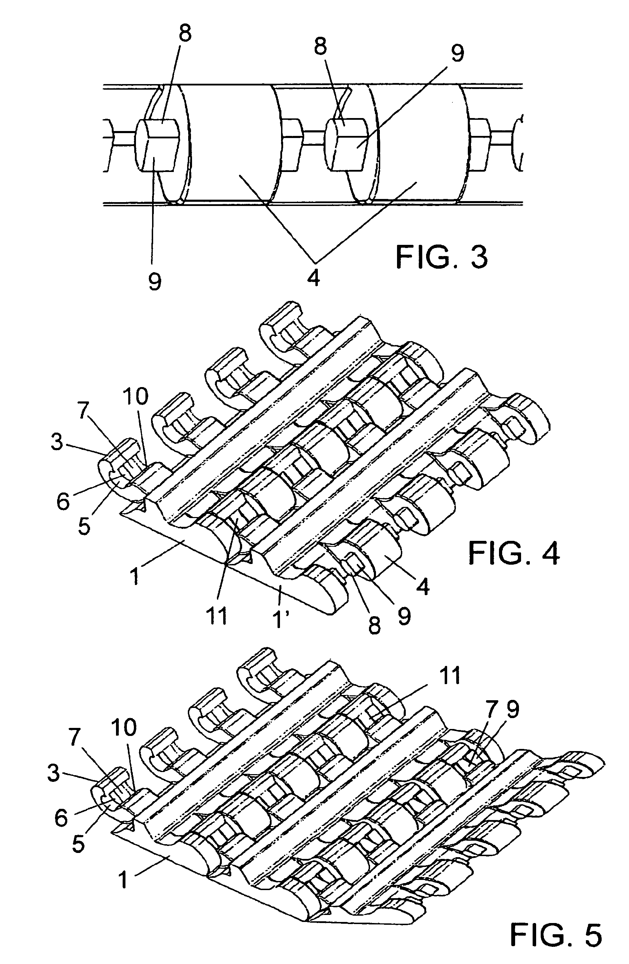

In accordance with the invention, and as can be seen in Figures 2 and 3, every socketed piece (3) is arranged in the form of a hook, there being a groove (5) with a constricted mouth in its centre, which protrudes considerably from the semi-cylinder, and which is divided into two parts by an intermediate bracket or partition (6), to form an open and flat edge (7) on the bracket or partition (6) which is aligned with the imaginary plane that includes the mouth of the seating devices (5).

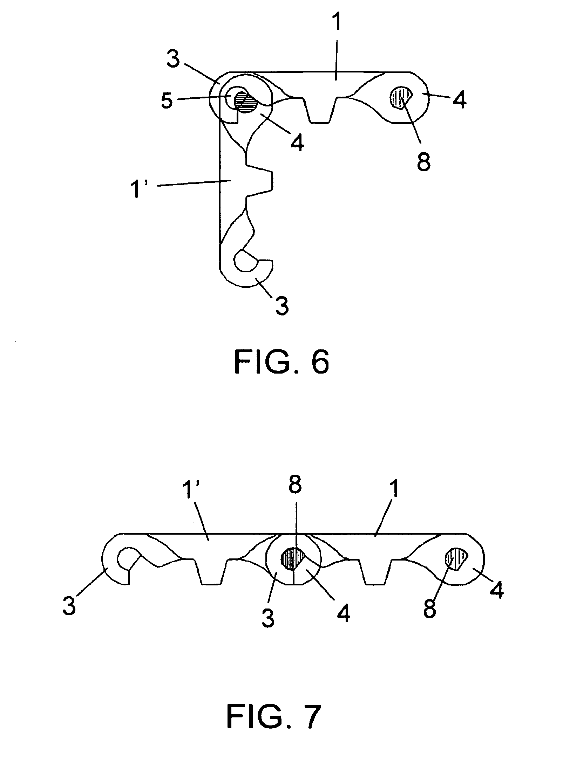

Furthermore, every protruding piece (4), aimed at fitting in between two socketed seating devices (3), is equipped with two coaxial pivots (8) opposite each other, practically cylindrical, whose diameter is the same as the diameter of the seating devices (5) of the socketed pieces, but with a flat side (9) which makes the section of those pivots identical to the section of the seating devices (5), so the flat sides (9) are facing in such a way that when two adjacent links (1-1') are essentially perpendicular, as can be seen in Figure 6, the pivots (8) can enter the seating devices (5), making a tight fit and without it being necessary for them to be subjected to any elastic deformation to enter the mouths of the seating devices that, as has already been pointed out, enables the strengthening partition (6) to be positioned.

Going back to the socketed pieces (3), these are provided with a flat section (10) close to the mouths of their seating devices (5), whose purpose is to act as a guide or sliding surface for the flat side (9) of the pivots (8), also in order to facilitate access to the mounting position between links, as shown in Figure 6.

In accordance with this structuring, and once the links coupled to each other are in the coplanar and normal working position, as can be seen in Figures 4 and 5, the open edge (7) of the strengthening partitions (6) with which the socketed pieces are equipped, are in a coplanar position with respect to the flat sides (9) of the pivots (8), as can be seen especially in Figure 4, forming a smoothly running joint plane (11), which makes it much easier to clean the chain, as can be seen clearly in the view shown in Figure 4.

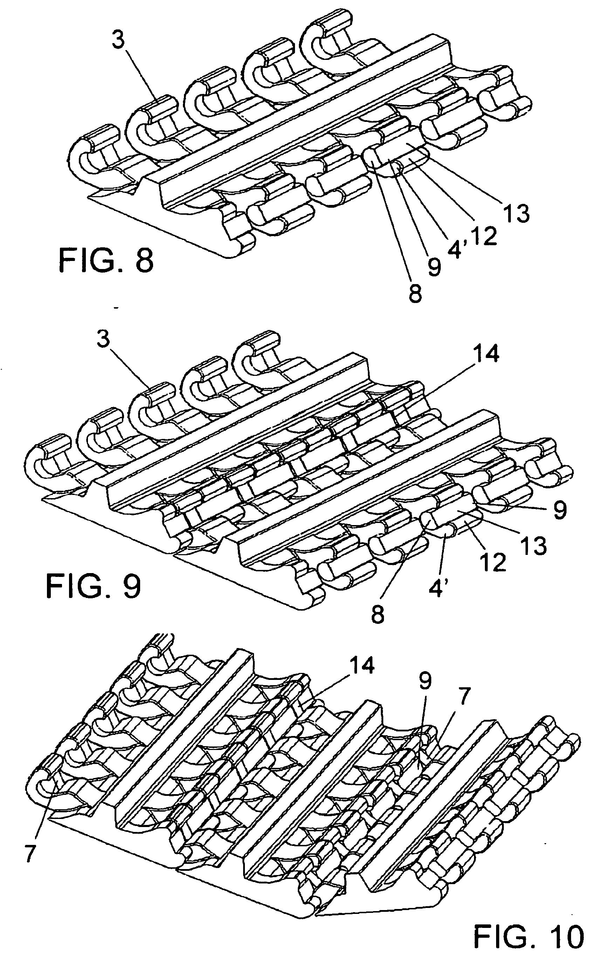

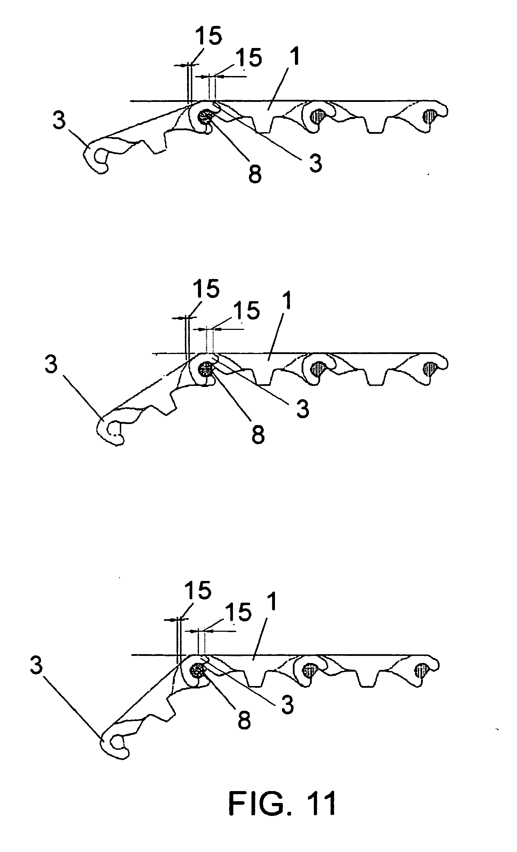

In the alternative realisation shown in Figures 8 to 11, the link basically has the same structural characteristics that have been described, the only difference being that the protruding pieces (4') have a grooved sunken part (12) at the open end, whose bottom (13) is coplanar with the flat side (9) of the coaxial and opposite pivots (8) of the protruding piece itself, thereby creating with them, perfect surface continuity, as can be seen especially in Figure 9, while the side walls of the sunken part (12) copy the section of the mouths of the socketed pieces (3).

What is thus achieved, albeit with a certain weakening of the protruding pieces (4') when compared to the protruding pieces (4) in the previous solution, these not affecting the mechanical characteristics of the belt because the section is not any smaller, is that cleaning channels (14) whose sections are even, are created at the couplings between links, which open up on the edges on either side of the chain and that make it much easier to clean the chain.

It must also be pointed out that, as can be seen especially in Figures 8, 9, 10 and 11, the socketed pieces (3) and the protruding pieces (4') of the links have a slightly elliptical outer section, in such a way that those links close perfectly onto each other when the conveyor belt is running in a straight line, whereas small holes (15) are created in the inflection zones of that chain that make it easier to clean that zone, for example with jets of water.

Finally, it must be pointed out that, not only in the example of the practical realisation shown in Figures 1 to 7 but also in the one shown in Figures 8 to 11, and as can be clearly seen in Figures 5 and 10, the aforementioned plane (11) in the first case and (14) in the second case, which form the open edge (7) of the strengthening partitions of the socketed piece with the flat side (9) of the coaxial and opposite pivots (8) of the protruding piece when the links are in alignment, facilitating the cleaning process, disappear when one link articulates with respect to another one, providing a "scraping" effect, these surfaces ceasing to be coplanar, in such a way that the partition or bracket of the socket acts as a scraper, removing any dirt that might have become stuck between the two pieces.

## Claims

1. ^{a}- A link for conveyor belts or chains of the type that have two alignments of pieces running along their longitudinal edges, one alignment being equipped with socketed pieces (3) and the other being equipped with protruding pieces (4), in such a way that the coupling of the two types of pieces (3, 4) enables the links to turn without the use of articulating rods or axes, each one of the socketed pieces (3) forming a sort of hook that defines a seating device that noticeably exceeds the semi-cylinder, where each protruding piece (4) is equipped with two coaxial and opposite pivots (8), wherein the intermediate partition (6) in the seating device (5) for each socketed piece (3), defines an open flat edge (7) included in the imaginary plane corresponding to the mouth of the seating device (5), whereas each one of the coaxial and opposite pivots (8) of each protruding piece (4-4'), is equipped with a flat side (9) that creates for those pivots (8) a formal section that has exactly the same dimensions as the seating device (5) belonging to the socketed piece, arrangements being made to ensure that the flat side (9) lies above the pivots (8) in such a way that it can be connected in the centre of the seating devices (5) without there being any need for the socketed pieces (3) to be deformed when the links to be joined form an angle of approximately 90°, **characterised by** the fact that when the links are in a coplanar position, their flat sides (9) are also coplanar with respect to the open edge (7) of the partitions (6) that strengthen the socketed pieces (3).

2. - A link for conveyor belts or chains, as in Claim 1, **characterised by** the fact that each socketed piece (3) is equipped, as an extension to the mouth leading to its segmented seating device (5), with a plane (10) facing in such a way as to act as a guide or sliding surface for the flat side (9) of the pivots (8) for the protruding pieces (4-4'), in order to facilitate the relative positioning between links while they are being assembled and mounted.

3. - A link for conveyor belts or chains, as in Claim 1, **characterised by** the fact that the protruding pieces (4') are provided with a sunken part (12) at their open end, whose bottom (13) is coplanar with the flat sides (9) of the pivots (8), whereas their sides copy the section of the mouth of the socketed pieces (3) in such a way that in the horizontal coupling between links, transverse grooves are formed in the chain, whose sections are adjacent.

4. - A link for conveyor belts or chains, as in Claim 1, **characterised by** the fact that the outer surfaces of the socketed pieces (3) are slightly elliptical opposite their mouth, in such a way that adjacent links create an upper closure between them in a coplanar arrangement for those links, whereas in the turning zones opening or holes (15) are created between links.

5. - A conveyor belt of the type that takes the form of a closed alignment of links according to claim 1.

6. - Conveyor belt, as in Claim 5, wherein each one of its links is designed according to claim 2.

7. - Conveyor belt, as in Claim 5, wherein each one of its links is designed according to claim 3.

8. - Conveyor belt, as in Claim 5, wherein each one of the links is designed according to claim 4.

## Patentansprüche

1. Kettenglied für Transportbänder oder -ketten, der Art, die zwei Anordnungen von Teilen aufweisen, die entlang ihrer Längsränder verlaufen, wobei eine Anordnung mit Aufnahmeteilen (3) ausgestattet ist und die andere mit Einsteckteilen (4), so dass die Kopplung der beiden Arten von Teilen (3, 4) es ermöglicht, dass die Kettenglieder drehbar sind, ohne hierzu Getenkstangen oder -achsen zu benutzen, wobei jedes der Aufnahmeteile (3) eine Art Haken bildet, der eine Auflagevorrichtung bildet, der klar über den Halbzylinder hinaussteht, wobei jedes Einsteckteil (4) mit zwei koaxialen und gegenüberliegenden Zapfen (8) verstehen ist, in dem die Zwischenwand (6) der Auflagevorrichtung jedes Aufnahmeteiles (3) einen offenen flachen Rand (7) festlegt, der in der gedachten Ebene enthalten ist, die der Mündung der Auflagevorrichtung (5) entspricht, während jeder der koaxialen und gegenüberliegenden Zapfen (8) jedes Einsteckteils (4-4') mit einer flachen Seite (9) versehen ist, die für die genannten Zapfen (8) einen Abschnitt herstellt, der genau die gleichen Abmessungen hat, wie die Auflagevorrichtung (5) des Aufnahmeteils, wobei Anordnungen hergestellt werden, die gewährleisten, dass die flache Seite (9) über den Zapfen (8) zu liegen kommt, so dass ein Anschluss im Mittelpunkt der Auflagevorrichtungen (5) vorgenommen werden kann, ohne Verformung der Aufnahmeteile (3), wenn die zu verbindenden Kettenglieder einen Winkel von ungefähr 90° zueinander aufweisen, **dadurch gekennzeichnet, dass** wenn die Kettenglieder eine in derselben Ebene liegende Postition einnehmen, ihre flachen Seiten (9) ebenfalls mit dem offenen Rand (7) der Wände (6), die die Aufnahmeteile (3) verstärken, in derselben Ebene liegen.

2. Kettenglied für Transportbänder oder -ketten nach Anspruch 1, **dadurch gekennzeichnet, dass** jedes Aufnahmeteil (3), als Verlängerung der Mündung, die zu der segmentierten Auflagevorrichtung (5) führt, mit einer gegenüberliegenden Ebene (10) verstehen ist, so dass diese als Führung oder als Gleitfläche für die flache Seite (9) der Zapfen (8) für die Einsteckteile (4-4') diese um so die Positionierung der Kettenglieder untereinander zu vereinfachen, während diese zusammengebaut und montiert werden.

3. Kettenglied für Transportbänder oder ketten nach Anspruch 1, **dadurch gekennzeichnet, dass** die Einsteckteile (4') mit einem abgesenkten Teil (12) an ihrem offenen Ende versehen sind, dessen boden (13) mit den flachen Seiten (9) der Zapfen (8) in derselben Ebene liegt, während ihre Seiten den Abschnitt der Mündung der Aufnahmeteile (3) imitieren, so dass bei der waagerechten Kopplung zwischen den Kettengliedern Querrinnen in der Kette gebildet werden, deren Abschnitte nebeneinander liegen.

4. Kettenglied für Transportbänder oder -ketten nach Anspruch 1, **dadurch gekennzeichnet, dass** die Außenflächen der Aufnahmeteile (3) gegenüber ihrer Mündung leicht elliptisch ausgeführt sind, so dass die nebeneinanderliegenden Kettenglieder bei einer Anordnung dieser Kettenglieder in derselben Ebene einen oberen Abschluss bilden, während in den Drehbereichen Öffnungen und Löcher (15) zwischen den Kettengliedern gebildet werden.

5. Transportband, der Art, die die Form einer geschlossenen Anordnung von Kettengliedern nach Anspruch 1 annimmt.

6. Transportband nach Anspruch 5, in der jedes der Kettenglieder nach Anspruch 2 ausgeführt ist.

7. Transportband nach Anspruch 5, in der jedes der Kettenglieder nach Anspruch 3 ausgeführt ist.

8. Transportband nach Anspruch 5, in der jedes der Kettenglieder nach Anspruch 4 ausgeführt ist.

## Revendications

1. Maillon d'une chaîne de convoyage ou d'une bande transporteuse ayant deux alignements de pièces qui s'écoulent tout au long de leurs bords longitudinaux; l'un des alignements est doté de pièces femelles (3), et l'autre est équipé de pièces mâles (4), de façon à ce que l'accouplement entre les deux types de pièces (3, 4) permette aux maillons de tourner sans utiliser des tiges ou des axes d'articulation; chaque pièce femelle (3) forme une sorte de crochet qui définit un dispositif de portée qui dépasse sensiblement le semi-cylindre, où chaque pièce mâle (4) est dotée de deux pivots coaxiaux et opposés (8), et dans laquelle la cloison intermédiaire (6) du dispositif de portée (5) de chaque pièce femelle (3), possède un bord plat ouvert (7) inclus sur le plan imaginaire correspondant à l'embouchure du dispositif de portée (5), tandis que chaque pivot coaxial et opposé (8) de chaque pièce mâle (4-4'), est doté d'un côté plat (9) qui crée dans ces pivots (8) une section formelle qui possède exactement les mêmes dimensions que le dispositif de portée (5) de la pièce femelle, avec des agencements pour garantir que le côté plat (9) se situe au dessus des pivots (8) pour qu'il puisse être connecté au centre des dispositifs de portée (5) sans déformer les pièces femelle (3) lorsque les maillons qui vont s'unir formeront un angle d'environ 90° ; caractérisé parce que, lorsque les maillons adoptent une position coplanaire, ses côtés plats (9) sont aussi coplanaires par rapport au bord ouvert (7) des cloisons (6) qui renforcent les pièces femelle (3).

2. Maillon d'une chaîne de convoyage ou d'une bande transporteuse selon la revendication 1, **caractérisé en ce que** chaque pièce femelle (3) est dotée, telle une prolongation de l'embouchure qui conduit à un dispositif de portée segmenté (5), d'un plan (10) opposé qui agit comme un glissage ou une surface de glissage du côté plat (9) des pivots (8) pour les pièces mâle (4-4'), afin de permette le positionnement relatif entre les maillons lorsqu'ils sont assemblés et montés.

3. Maillon d'une chaîne de convoyage ou d'une bande transporteuse selon la revendication 1, **caractérisé en ce que** les pièces mâle (4') possèdent une partie abaissée (12) dans leur extrémité ouverte dont le fond (13) est coplanaire avec les côtés plats (9) des pivots (8), tandis que leurs côtés copient la section de l'embouchure des pièces femelle (3) de façon à ce que des cannelures transversales de la chaîne dont les sections sont adjacentes se forment dans l'accouplement horizontal entre les maillons.

4. Maillon d'une chaîne de convoyage ou d'une bande transporteuse selon la revendication 1, **caractérisé en ce que** les surfaces externes des pièces femelle (3) sont légèrement elliptiques à l'opposé de leur embouchure, de façon à ce que les maillons contigus créent une fermeture supérieure entre eux dans un agencement coplanaire pour ces maillons, alors que des ouvertures ou orifices (15) se créent entre les maillons dans les zones de tournure.

5. Bande transporteuse qui adopte une forme d'alignement fermé de maillons, conformément à la revendication 1.

6. Bande transporteuse, selon la revendication 5, dans laquelle chaque maillon est conçu conformément à la revendication 2.

7. Bande transporteuse, selon la revendication 5, dans laquelle chaque maillon est conçu conformément à la revendication 3.

8. Bande transporteuse, selon la revendication 5, dans laquelle chaque maillon est conçu conformément à la revendication 4.
